# EUROPÄISCHE PATENTANMELDUNG

(11) **EP 1 288 061 A1**
(43) Veröffentlichungstag der Anmeldung: **05.03.2003**
(21) Anmeldenummer: 02018424.8
(22) Anmeldetag: 16.08.2002
(51) Int. Cl.: B60N 2/16, B60N 2/427

(54) **Fahrzeugsitz, insbesondere Kraftfahrzeugsitz**

(30) Priorität: 01.09.2001 DE 10142984
(71) Anmelder: Keiper GmbH & Co., 67657 Kaiserslautern (DE)
(72) Erfinder: Teufel, Ingo, 67806 Rockenhausen (DE); Mühlberger, Joachim, 67271 Obersülzen (DE)
(74) Vertreter: Patentanwälte Hosenthien-Held und Dr. Held

(57) **Zusammenfassung**

Bei einem Fahrzeugsitz, insbesondere einem Kraftfahrzeugsitz, mit einer Rükkenlehne (29; 129) und mit einem Sitzteil (3; 103), das eine gelenkige Struktur (7; 107) aufweist, welche im Heckcrashfall eine Geometrieänderung erfährt, kompensiert die Geometrieänderung der gelenkigen Struktur (7; 107) die Rückverlagerung der Rückenlehne (29; 129) wenigstens teilweise.

## Beschreibung

Die Erfindung betrifft einen Fahrzeugsitz, insbesondere einen Kraftfahrzeugsitz, mit den Merkmalen des Oberbegriffs des Anspruches 1.

Aus der DE 199 53 630 A1 ist ein Fahrzeugsitz dieser Art bekannt, bei dem im Crashfall eine Geometrieänderung der gelenkigen Struktur des Höheneinstellers eine Sperrvorrichtung aktiviert, welche die gelenkige Struktur starr macht, um ungleichmäßige Krafteinleitungen in die gelenkige Struktur zum Schutz des Insassens zu verhindern.

Der Erfindung liegt die Aufgabe zu Grunde, bei einem Fahrzeugsitz der eingangs genannten Art den Schutz des Insassens zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, daß die Geometrieänderung der gelenkigen Struktur die Rückverlagerung der Rückenlehne, welche aufgrund des Heckcrashs erfolgt, wenigstens teilweise kompensiert, kann die Rückenlehne den Insassen, welcher sich dann relativ zu ihr auf sie zu bewegt, besser aufnehmen, abstützen und dadurch schützen. Die Erfindung ist vorzugsweise für höheneinstellbare Fahrzeugsitze, aber auch für Fahrzeugsitze ohne Höheneinsteller anwendbar. Im Falle der höheneinstellbaren Fahrzeugsitze bildet die gelenkige Struktur den Höheneinsteller und die gelenkige Struktur ist - mittels motorischer Betätigung oder manuell nach Entriegelung - auch im Normalfall beweglich.

Die notwendige Geometrieänderung der gelenkigen Struktur erfolgt vorzugsweise als eine Aufrichtbewegung, welche den die Rückenlehne tragenden hinteren Bereich des Sitzrahmens relativ zum vorderen Bereich anhebt und insgesamt nach hinten verschiebt, beispielsweise als Resultat einer Vergrößerung des Abstandes zwischen den unteren Lagerstellen, d.h. einer Vergrößerung des Basis der gelenkigen Struktur. Über die Wahl der Abmessungen und Winkel in der gelenkigen Struktur kann die Aufrichtbewegung gesteuert werden. Vorzugsweise verschiebt sich die hintere Lagerstelle im Heckcrashfall, beispielsweise durch eine zumindest teilweise plastische Verformung eines deformierbaren Elementes, welches zugleich Bewegungsenergie abbauen kann. Es sind aber auch andere Geometrieänderungen der gelenkigen Struktur möglich, welche letztendlich zu einer Vorwärtsschwenkbewegung der Rückenlehne führen.

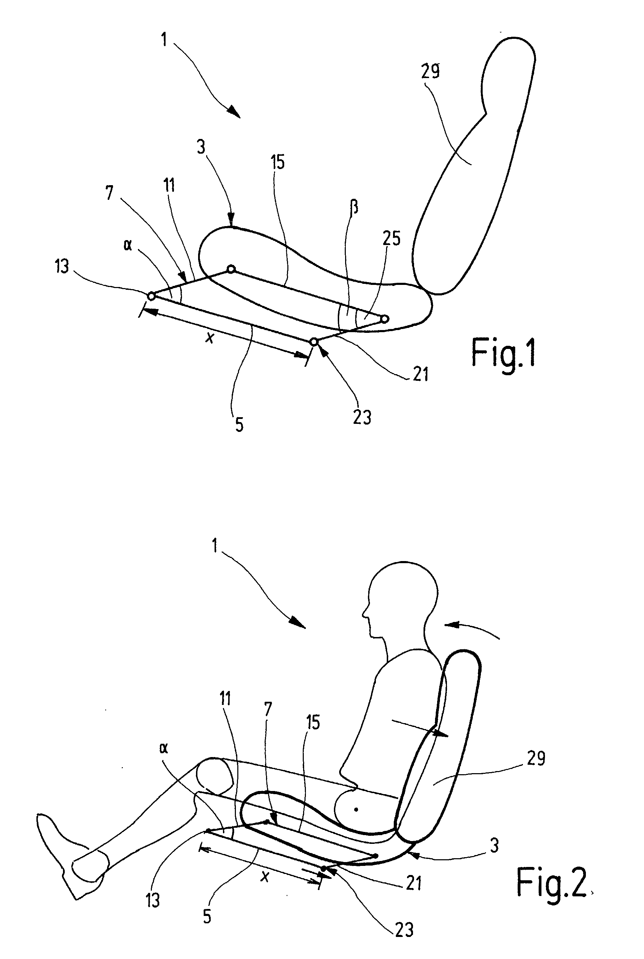

Im folgenden ist die Erfindung anhand zweier in der Zeichnung dargestellten Ausführungsbeispiele näher erläutert. Es zeigen
- Fig. 1: eine schematische Darstellung des ersten Ausführungsbeispiels mit gelenkiger Struktur im Normalfall,
- Fig. 2: eine Darstellung entsprechend Fig. 1 im Heckcrashfall,

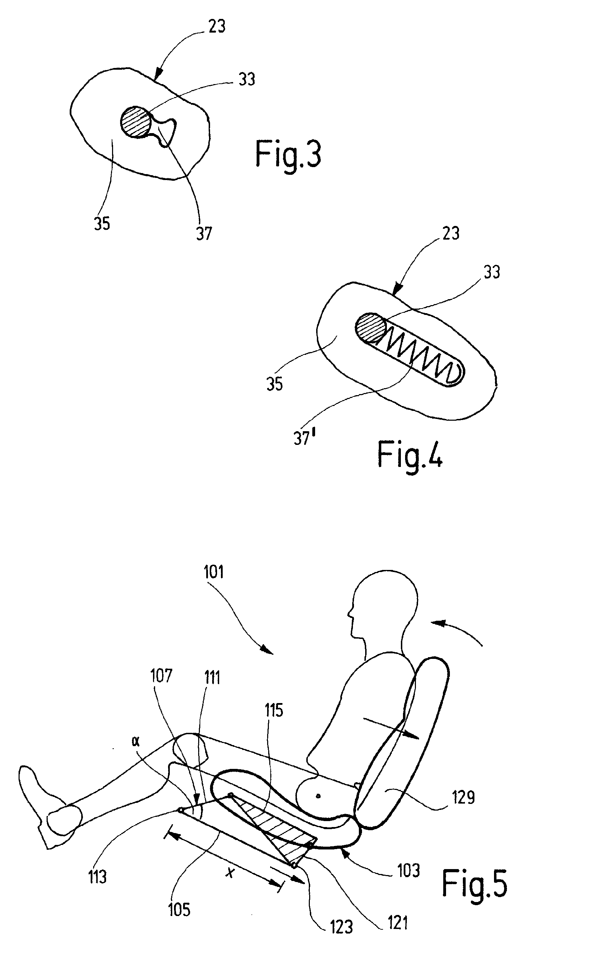

- Fig. 3: eine schematische Detaildarstellung einer hinteren Lagerstelle des ersten Ausführungsbeispiels im Normalfall,
- Fig. 4: eine Fig. 3 entsprechende Darstellung einer hinteren Lagerstelle in abgewandelter Ausführung, und
- Fig. 5: eine Darstellung entsprechend Fig. 2 des zweiten Ausführungsbeispiels.

Im ersten Ausführungsbeispiel ist ein Fahrzeugsitz 1 als höheneinstellbarer Fahrersitz eines Kraftfahrzeuges ausgebildet. Das Sitzteil 3 des Fahrzeugsitzes 1 ist in an sich bekannter Weise mittels Sitzschienenpaaren, bestehend aus einer Unterschiene und einer in derselben geführten Oberschiene 5, in Sitzlängsrichtung einstellbar. Als Höheneinsteller weist das Sitzteil 3 auf jeder Fahrzeugsitzseite eine als Viergelenk 7 ausgebildete, gelenkige Struktur auf. Das Viergelenk 7 besteht aus der Oberschiene 5, aus einer nach hinten geneigten, vorderen Schwinge 11, welche einerseits mittels eines vorderen Gelenks 13 an der Oberschiene 5 und andererseits an einem Sitzrahmen 15 angelenkt ist, aus dem Sitzrahmen 15 und aus einer nach hinten geneigten, hinteren Schwinge 21, welche als hinterer Koppelbereich einerseits mittels einer hinteren Lagerstelle 23 an der Oberschiene 5 und andererseits am Sitzrahmen 15 angelenkt ist.

Im Viergelenk 7 ist der entlang der Oberschiene 5 gemessene Abstand zwischen dem vorderen Gelenk 13 und der hinteren Lagerstelle 23, d.h. die Basis, mit x bezeichnet, der Winkel zwischen der Oberschiene 5 und der vorderen Schwinge 11 mit α und der Winkel zwischen dem Sitzrahmen 15 und der hinteren Schwinge 21 mit β. Zwischen der hinteren Schwinge 21 und dem Sitzrahmen 15, also im Bereich des Winkels β, wirkt auf einer Fahrzeugsitzseite ein Antrieb 25 für eine motorische Betätigung des Höheneinstellers 7. Am Sitzrahmen 15 ist die Rückenlehne 29 mittels nicht näher dargestellter Lehnenneigungseinstellbeschläge angebracht.

Die hintere Lagerstelle 23 besteht im wesentlichen aus einem Lagerbolzen 33 zur Anlenkung der hinteren Schwinge 21 und einem oberschienenfesten Lagerbereich 35, welcher den Lagerbolzen 33 unter Bildung einer Kulisse umschließt, wobei sich im Normalfall der Lagerbolzen 33 am in Fahrtrichtung vorderen Ende dieser Kulisse befindet. Der Lagerbereich 35 weist in Fahrtrichtung hinter dem Lagerbolzen 33 als Lastbegrenzer beispielsweise eine Deformationszone 37 in Form einer Verengung oder in abgewandelter Ausführung einen Deformationskörper 37' auf. Die Deformationszone 37 oder der Deformationskörper 37' sind zum Abbau von Bewegungsenergie vorzugsweise überwiegend plastisch verformbar, können aber auch elastische Anteile aufweisen.

Im Falle eines Heckcrashs werden die direkt mit der Fahrzeugstruktur verbundenen Sitzschienen des Fahrzeugsitzes 1 stärker nach vorne beschleunigt als die gelenkig angebundenen Teile, insbesondere als der Sitzrahmen 15 und die Rückenlehne 29. Bei einer definierten Last verformt sich in der hinteren Lagerstelle 23 der dort vorgesehene Lastbegrenzer, so daß sich der Lagerbolzen 33 nach hinten bewegt. Der Abstand x vergrößert sich, während sich der Winkel α zugleich verkleinert. Der Winkel β bleibt jedoch aufgrund der Sperrwirkung des Antriebs 25 unverändert. Die durch die Änderungen von x und α definierte geometrische Änderung des Viergelenks 7 führt zu einer Aufrichtbewegung der hinteren Schwinge 21, also einer Schwenkbewegung entgegen dem Uhrzeigersinn gemäß der Zeichnung, wobei die Schwenkachse nicht ortsfest ist. Wegen des gleichbleibenden Winkels β wird der Sitzrahmen 15 durch die Bewegung der hinteren Schwinge 21 in seinem hinteren Bereich angehoben und aufgrund der Verringerung des Winkels α in seinem vorderen Bereich abgesenkt, wobei sich der Sitzrahmen 15 zugleich etwas nach hinten verschiebt. Dadurch entsteht eine Bewegungskomponente der Rückenlehne 29 mit Aufrichtwirkung, welche die Rückverlagerung aufgrund des Heckcrashs wenigstens teilweise kompensiert, d.h. die Rückenlehne 29 bewegt sich relativ zum einsinkenden Insassen etwas nach vorne und kann so den Insassen besser abstützen.

Das zweite Ausführungsbeispiel gleicht weitgehend dem ersten Ausführungsbeispiel, insbesondere hinsichtlich seiner Crasheigenschaften, weshalb gleiche und gleichwirkende Bauteile mit um 100 höheren Bezugszeichen gekennzeichnet sind.

Im Sitzteil 103 des Fahrzeugsitzes 101 definiert x wiederum den Abstand zwischen dem vorderen Gelenk 113 und der hinteren Lagerstelle 123, während α den Winkel zwischen der Oberschiene 105 und der vorderen Schwinge 111 bezeichnet. Der Fahrzeugsitz 101 ist jedoch ohne Höheneinsteller ausgebildet, d.h. der Sitzrahmen 115 und die hintere Schwinge 121 sind starr miteinander verbunden. Anstelle eines Viergelenks liegt daher ein Dreigelenk 107 vor.

Im Falle eines Heckcrashs führt die elastisch-plastische Verschiebung in der hinteren Lagerstelle 123, welche wie im ersten Ausführungsbeispiel oder der Abwandlung hierzu aufgebaut ist, zu einer Vergrößerung von x und einer Verringerung von α. Der Sitzrahmen 115 wird ebenso an seinem vorderen Ende abgesenkt und an seinem hinteren Ende angehoben, so daß die Rückenlehne 129 wie im ersten Ausführungsbeispiel eine leichte Vorwärtsschwenkbewegung durchführt.

### Bezugszeichenliste

- 1, 101: Fahrzeugsitz
- 3, 103: Sitzteil
- 5, 105: Oberschiene
- 7: Viergelenk, gelenkige Struktur
- 11, 111: vordere Schwinge
- 13, 113: vorderes Gelenk
- 15, 115: Sitzrahmen
- 21, 121: hintere Schwinge
- 23, 123: hintere Lagerstelle
- 25: Antrieb
- 29, 129: Rückenlehne
- 33: Lagerbolzen
- 35: Lagerbereich
- 37: Deformationszone
- 37': Deformationskörper
- 107: Dreigelenk, gelenkige Struktur
- x: Abstand zwischen vorderem Gelenk und hinterer Lagerstelle
- α: Winkel zwischen Oberschiene und vorderer Schwinge
- β: Winkel zwischen Sitzrahmen und hinterer Schwinge

## Patentansprüche

1. Fahrzeugsitz, insbesondere Kraftfahrzeugsitz, mit einer Rückenlehne (29; 129) und mit einem Sitzteil (3; 103), das eine gelenkige Struktur (7; 107) aufweist, welche im Heckcrashfall eine Geometrieänderung erfährt, **dadurch gekennzeichnet, daß** die Geometrieänderung der gelenkigen Struktur (7; 107) die Rückverlagerung der Rückenlehne (29; 129) wenigstens teilweise kompensiert.

2. Fahrzeugsitz nach Anspruch 1, **dadurch gekennzeichnet, daß** sich im Heckcrashfall ein hinterer Koppelbereich (21, 23; 121, 123) der gelenkigen Struktur (7; 107) sich wenigstens in geringem Maße aufrichtet.

3. Fahrzeugsitz nach Anspruch 1 oder 2, **dadurch gekennzeichnet, daß** sich im Heckcrashfall der Abstand (x) zwischen einem vorderen Gelenk (13; 113) und einer hinteren Lagerstelle (23; 123) im unteren Bereich der gelenkigen Struktur (7; 107) vergrößert.

4. Fahrzeugsitz nach Anspruch 3, **dadurch gekennzeichnet, daß** sich die hintere Lagerstelle (23; 123) nach hinten verschiebt.

5. Fahrzeugsitz nach Anspruch 3 oder 4, **dadurch gekennzeichnet, daß** die hintere Lagerstelle (23; 123) wenigstens ein deformierbares Element (37, 37') aufweist.

6. Fahrzeugsitz nach Anspruch 5, **dadurch gekennzeichnet, daß** die hintere Lagerstelle (23; 123) in einem Lagerbereich (33) einen durch das deformierbare Element (37, 37') abgestützten Lagerbolzen (35) aufweist.

7. Fahrzeugsitz nach einem der Ansprüche 1 bis 6, **dadurch gekennzeichnet, daß** bei der Geometrieänderung der gelenkigen Struktur (7; 107) sich eine nach hinten geneigte, hintere Schwinge (21; 121) der gelenkigen Struktur (7; 107) aufrichtet.

8. Fahrzeugsitz nach einem der Ansprüche 1 bis 7, **dadurch gekennzeichnet, daß** die Geometrieänderung der gelenkigen Struktur (7; 107) einen Sitzrahmen (15; 115) der gelenkigen Struktur (7; 107) vorne absenkt und hinten anhebt.

9. Fahrzeugsitz nach Anspruch 8, **dadurch gekennzeichnet, daß** die Rückenlehne (29; 129) am Sitzrahmen (15; 115) angebracht ist.

10. Fahrzeugsitz nach einem der Ansprüche 1 bis 9, **dadurch gekennzeichnet, daß** das Sitzteil (3; 103) höheneinstellbar ist.
